# EUROPEAN PATENT APPLICATION

(11) **EP 4 742 358 A1**
(43) Date of publication of application: **13.05.2026**
(21) Application number: 24835367.4
(22) Date of filing: 03.07.2024
(51) Int. Cl.: H01M 10/42, H02J 7/00, H02J 7/34, H01M 10/44

(54) **BATTERY MANAGEMENT SYSTEM AND METHOD**

(30) Priority: 06.07.2023 CN 202310819802
(71) Applicant: Common Mode (Gongmo) Semiconductor Co. Ltd, Suzhou, Jiangsu 215021 (CN)
(72) Inventor: YAO, Suyi, Suzhou, Jiangsu 215021 (CN); HE, Jie, Suzhou, Jiangsu 215021 (CN); WANG, Langyuan, Suzhou, Jiangsu 215021 (CN)
(74) Representative: Proi World Intellectual Property GmbH
(86) International application number: PCT/CN2024/103321
(87) International publication number: WO 2025/007887

(57) **Abstract**

Disclosed in the present invention are a battery management system and method. In the system, a battery module M comprises a switch A, a switch B, a battery cell C, a switch driving control unit D and a battery monitoring unit E, wherein a detection end of E is connected to the battery cell C, so as to acquire charge-level information and upload same to a processor unit F by means of a communication management unit G; and a command sent by the processor unit F is received to control the switch driving control unit D, so as to implement state control for the switches A and B. By means of the battery management system and method provided in the present invention, the limitations on the performance and service life of a single battery cell can be broken, such that the performance and service life of the entire battery pack system are improved.

## Description

### TECHNICAL FIELD

The present invention relates to the technical field of battery management system, and more specifically, to a battery management system and a battery management method .

### BACKGROUND

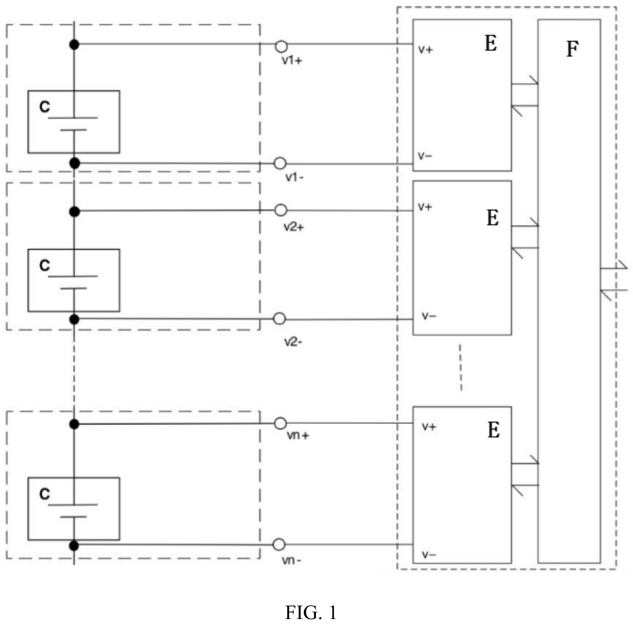

BMS is the abbreviation for Battery Management System, and its core system architecture is shown in FIG. 1, including: C. a battery unit, composed of a single battery cell or a plurality of battery cells connected in parallel, usually with functions of short-circuit protection, overheating protection, leakage protection, etc.; E. for measuring voltage information of the battery unit and providing feedback to F, which then controls E to perform battery management and other operations, where a plurality of Es are often integrated in one chip, known as an analog front end (AFE) of the battery management system; and F. a controller for acquiring basic battery information from E and performing further algorithms to control the operation of the entire battery management system.

The conventional system architecture requires long lifespan of battery units and high consistency between battery units. The failure of a battery unit or inconsistent performance between battery units may readily lead to a significant decline in overall system performance or system failure. The maximum lifespan of the system is close to the lifespan of battery units, and is limited by the lifespan of a single battery unit and the consistency between the battery units. The lifespan of the system is estimated as follows: assuming the system has N battery units, the failure probability of the battery units is P₁, and the consistency failure probability between the battery units is P₂, the failure probability of the system is close to N×P₁+P₂.

Currently, a battery of an energy storage or power battery system is usually composed of a plurality of battery units. The performance and lifespan of the conventional architecture are often limited by the performance and lifespan of the battery units. Therefore, overcoming the limitations on the performance and lifespan of battery units to improve the performance and lifespan of an entire battery pack system presents a critical challenge.

### SUMMARY

The objective of the present invention is to propose a battery management system and method that can break through the limitations on the performance and lifespan of a single-stage battery unit to improve the performance and lifespan of an entire battery pack system.

In order to achieve the above objective, the present invention provides a battery management system, including: a battery module M, which can be connected in series or parallel to form a battery pack of corresponding capacity and voltage; a communication management unit G, connected to each battery module M to acquire power information; a processor unit F, connected to the communication management unit G to acquire the power information of each battery module M and send a control command to the battery module M based on the power information;
the battery module M includes a switch A, a switch B, a battery unit C, a switch drive control unit D, and a battery monitoring unit E;
the battery unit C, as a single-stage battery unit, consists of one or more battery cells connected in parallel or parallel and series;
the switch A is connected in series to the battery unit C to form a branch, and the switch A is used to control the on and off of the battery unit C;
the switch B is connected in parallel to the series branch formed by the switch A and the battery unit C, and the switch B is used to control whether the battery unit C is bypassed;
the switch drive control unit D is connected to the switches A and B and used to control the states of the switches A and B; and
a detection terminal of the battery monitoring unit E is connected to the battery unit C directly or indirectly through the switch A, to acquire the power information, which is then uploaded to the processor unit F through the communication management unit G; and the battery monitoring unit E receives the command sent by the processor unit F, to control the switch drive control unit D, so as to control the states of the switches A and B.

Further, the communication management unit G is connected to the battery monitoring unit E of the battery module M in a daisy chain or wireless communication manner.

Further, the battery monitoring unit E is directly connected to the switch drive control unit D.

Further, the battery monitoring unit E is connected to the switch drive control unit D through a daisy chain or wireless communication.

Further, the battery monitoring unit E is integrated with the switch drive control unit D, and the integrated D+E is connected to the communication management unit G in a daisy chain or wireless communication manner.

Further, the switch drive control unit D is integrated with the switches A and B, and the battery monitoring unit E is connected to the integrated A+B+D directly or through a daisy chain or wireless communication, and is also connected to the communication management unit G through a daisy chain or wireless communication.

Further, the battery module M includes a plurality of battery units C; each battery unit C is configured with the corresponding switch A, switch B, and switch drive control unit D; and the plurality of battery units C can be connected in series or parallel to form the battery module M of corresponding capacity and voltage.

A battery management method, based on the battery management system, includes a dynamic battery unit removal step:
assuming a battery pack comprises m strings of battery modules connected in parallel, with n battery units C connected in series in each string of battery module, wherein 1 ≤ m;
when the battery pack is working in a discharge state, if the voltage Vij of any battery unit C in the battery pack is less than a battery overdischarge protection voltage threshold VL, where i represents the number of a battery unit string, 1 ≤ i ≤ m, j represents the number of the battery unit C in the battery unit string, and 1 ≤ j ≤ n;
then the battery unit with the lowest voltage in each string is found, and the processor unit F turns off the corresponding switch Aij and turns on the switch Bij through the switch drive control unit D corresponding to the battery unit C; and
continuous monitoring and dynamic removal are performed; at this point, the capacity of the battery pack changes to (1-1/nt) of its original capacity, where t represents the number of dynamic removals.

Further, the method further includes a charge balance step:
when the battery pack is working in a charge state, if the voltage Vij of any battery unit C in the battery pack is greater than a battery unit overdischarge overvoltage protection threshold VH, the battery unit with the highest voltage in each string is found, and the processor unit F turns off the corresponding switch Aij and turns on the switch Bij through the switch drive control unit D corresponding to the battery unit C;
continuous monitoring is performed to achieve balance of the battery units within the battery pack; and
after the charge is completed or the charge state is converted to the discharge state, the switch B is turned off and the switch A is turned on in each battery unit C processed in the charge balance step.

Further, in the switch on/off process, the D provides current limiting protection for the switches A and B separately.

Further, the method further includes a static removal step:
when any battery unit C is damaged, the battery unit is hard isolated, the switch A is turned off and the switch B is turned on through the switch drive control unit D corresponding to the battery unit C.

Further, when m=1, that is, when the battery pack includes only one string of battery module, the dynamic removal, charge balance, on/off current limiting protection, and static removal methods are also applicable.

The beneficial effects of the present invention are as follows:
When a battery is charged by a conventional architecture and at a rate of 1C, fast charging may lead to rapid degradation of battery unit performance and inconsistency aggravation, resulting in rapid degradation of system performance. When the system of the present invention is used, the system can support nC fast charging, so based on the charge balance step, when the battery units attenuate rapidly or inconsistently, system capacity attenuation will be avoided.

When a battery pack is discharged, the lower limit of an actual available capacity is determined by a battery unit C with lowest capacity or worst performance, so due to the buckets effect, the discharge is insufficient. When the system of the present invention is used, the discharge is not determined by the battery unit C with the lowest capacity or worst performance, there is no buckets effect, and based on the dynamic removal of battery units, sufficient discharge can be achieved.

When the battery pack is discharged, because the battery units are prone to power disequilibrium, the charging capacity is limited by the battery unit with maximum capacity. When the system of the present invention is used, each battery unit can theoretically be fully charged by peeling off the fully charged battery units one by one, thereby achieving power equilibrium in the battery units.

The lifespan of the system of the present invention is not limited by the lifespan of a single battery unit or the consistency between battery units. The lifespan of the system is estimated as follows: assuming the system has N battery units, the failure probability of battery units is P1, and the consistency failure probability between battery units is P2, after the system can achieve weak battery removal and bad battery isolation, the failure probability of the system is close to P1N. In theory, the new architecture can greatly reduce the failure probability of the system.

When the conventional architecture is used, after the single battery unit fails, such as after thermal protection, short-circuit protection, or open-circuit protection, the entire battery unit string must be isolated; the protection level stays at the string level, and the probability of system failure is higher. When the system of the present invention is used, after the single battery unit fails, such as after thermal protection, short-circuit protection, or open-circuit protection, only the battery unit needs to be isolated. The new topology can achieve more accurate battery unit protection and isolation, and the probability of system failure is lower.

The conventional architecture is sensitive to battery unit failure: the failure of the single battery unit may directly lead to system failure. The system of the present invention is insensitive to the failure of the single battery unit, and the failure of battery units is controlled by a scheduling mechanism, so system failure is avoided.

The present invention has other characteristics and advantages. These characteristics and advantages will be apparent from the accompanying drawings and subsequent specific embodiments incorporated herein, or will be described in detail in the accompanying drawings and subsequent specific embodiments incorporated herein. These drawings and specific embodiments are jointly used to explain the specific principles of the present invention.

### BRIEF DESCRIPTION OF THE DRAWINGS

By providing a more detailed description of exemplary embodiments of the present invention in conjunction with the accompanying drawings, the above and other objectives, features, and advantages of the present invention will become more apparent.
FIG. 1 illustrates a schematic structural diagram of a conventional battery management system (BMS) in the background art.
FIG. 2 illustrates a schematic structural diagram of a battery management system of the present invention.
FIG. 3 illustrates a schematic structural diagram of direct communication between a battery monitoring unit E and a switch drive control unit D in a battery module M according to an embodiment of the present invention.
FIG. 4 illustrates a schematic structural diagram of a daisy chain or wireless communication between a battery monitoring unit E and a switch drive control unit D in a battery module M according to an embodiment of the present invention.
FIG. 5 illustrates a schematic structural diagram of a daisy chain or wireless communication after integration of a battery monitoring unit E and a switch drive control unit D in a battery module M according to an embodiment of the present invention.
FIG. 6 illustrates a schematic structural diagram of a daisy chain or wireless communication after integration of a switch drive control unit D and switches A and B in a battery module M according to an embodiment of the present invention.
FIG. 7 illustrates a schematic structural diagram according to an embodiment of the present invention.

In the figures: QG(n) represents a control terminal of switch A, SG(n) represents a control terminal of switch B, C(n) and C(1) represent positive terminal connection pins of battery units, and C(n-1) and C(0) represent negative terminal connection pins of battery units.

### DETAILED DESCRIPTION OF THE EMBODIMENTS

The present invention will be described in more detail below. Although the present invention provides preferred embodiments, it should be understood that the present invention can be implemented in various forms and should not be limited by the embodiments described herein. On the contrary, these embodiments are provided to make the present invention more thorough and complete, and to fully convey the scope of the present invention to those skilled in the art.

### First embodiment:

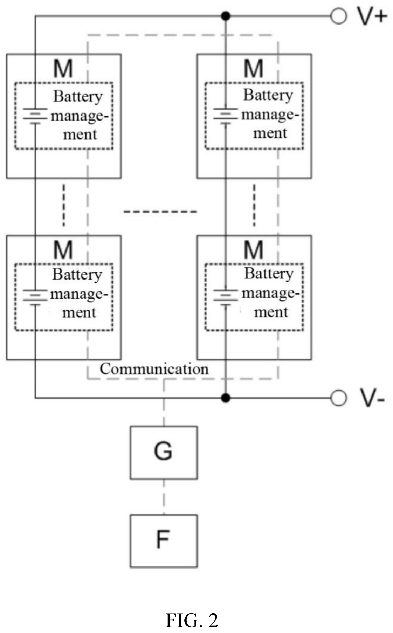

As shown in FIG. 2, the present invention provides a battery management system, including: a battery module M, which can be connected in series or parallel to form a battery pack of corresponding capacity and voltage; a communication management unit G, connected to each battery module M to acquire power information; a processor unit F, connected to the communication management unit G to acquire the power information of each battery module M and send a control command to the battery module M based on the power information;
The battery module M includes a switch A, a switch B, a battery unit C, a switch drive control unit D, and a battery monitoring unit E;
The battery unit C, as a single-stage battery unit, consists of one or more battery cells connected in parallel or parallel and series;
The switch A is connected in series to the battery unit C to form a branch, and the switch A is used to control the on and off of the battery unit C;
The switch B is connected in parallel to the series branch formed by the switch A and the battery unit C, and the switch B is used to control whether the battery unit C is bypassed;
The switch drive control unit D is connected to the switches A and B and used to control the states of the switches A and B;
A detection terminal of the battery monitoring unit E is connected to the battery unit C directly or indirectly through the switch A, to acquire the power information, which is then uploaded to the processor unit F through the communication management unit G; the battery monitoring unit E receives the command sent by the processor unit F, to control the switch drive control unit D, so as to control the states of the switches A and B; and the communication management unit G is connected to the battery monitoring unit E of the battery module M in a daisy chain or wireless communication manner.

This embodiment can achieve management and protection on the single battery unit C, prevent overvoltage, overcharge, and overdischarge, and improve the reliability and safety of the battery module.

### Second embodiment:

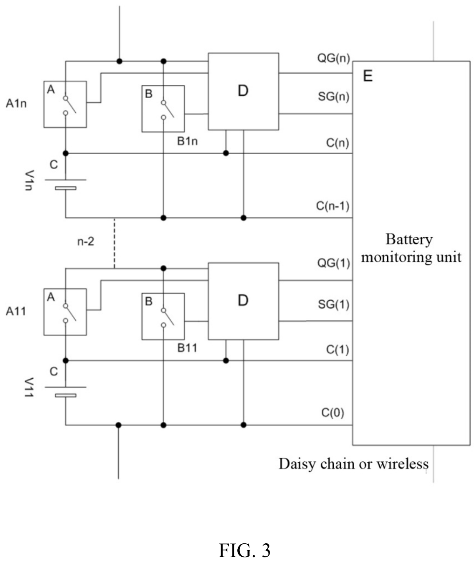

On the basis of the first embodiment, in the battery module M, as shown in FIG. 3, the battery monitoring unit E is directly connected to the switch drive control unit D.

### Third embodiment:

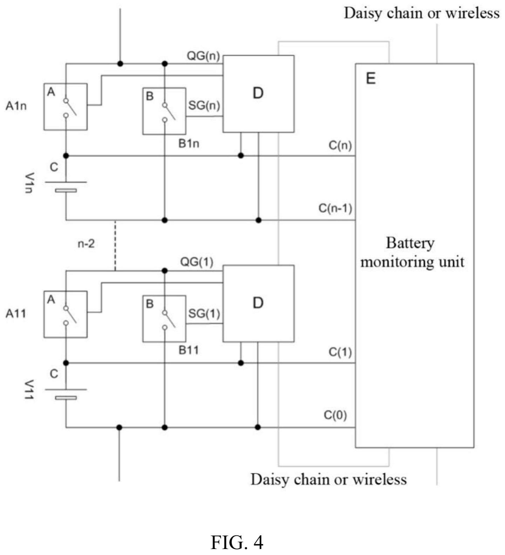

On the basis of the first embodiment, in the battery module M, as shown in FIG. 4, the battery monitoring unit E is connected to the switch drive control unit D through a daisy chain or wireless communication.

### Fourth embodiment:

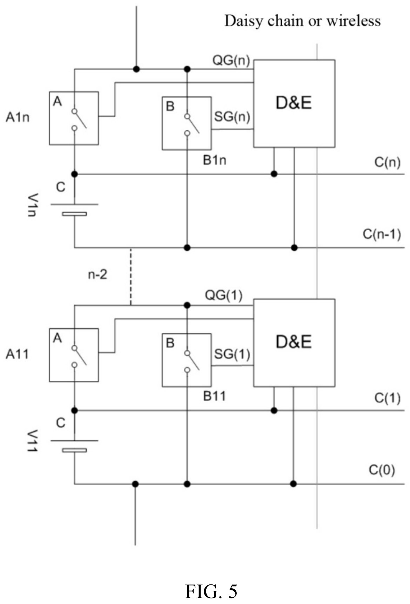

On the basis of the first embodiment, in the battery module M, as shown in FIG. 5, the battery monitoring unit E is integrated with the switch drive control unit D, and the integrated D+E is connected to the communication management unit G in a daisy chain or wireless communication manner.

### Fifth embodiment:

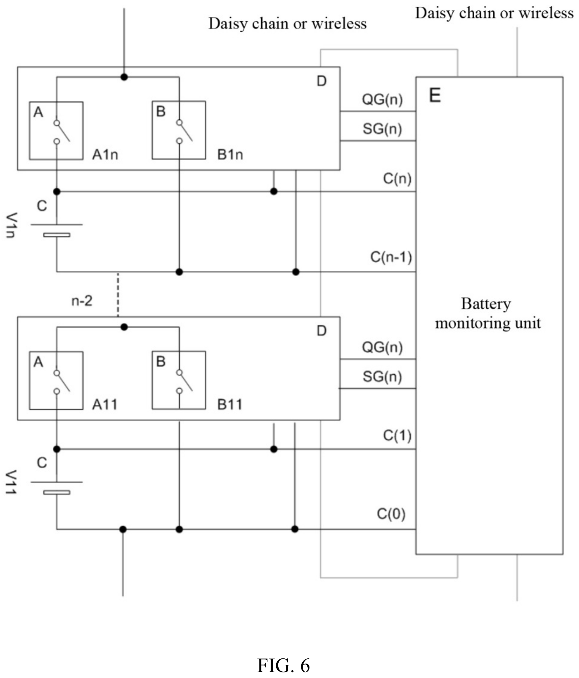

On the basis of the first embodiment, in the battery module M, as shown in FIG. 6, the switch drive control unit D is integrated with the switches A and B; the battery monitoring unit E is connected to the integrated A+B+D directly or through a daisy chain or wireless communication, and is also connected to the communication management unit G through a daisy chain or wireless communication.

The second to fifth embodiments all show the architecture of M and variants thereof.

### Sixth embodiment:

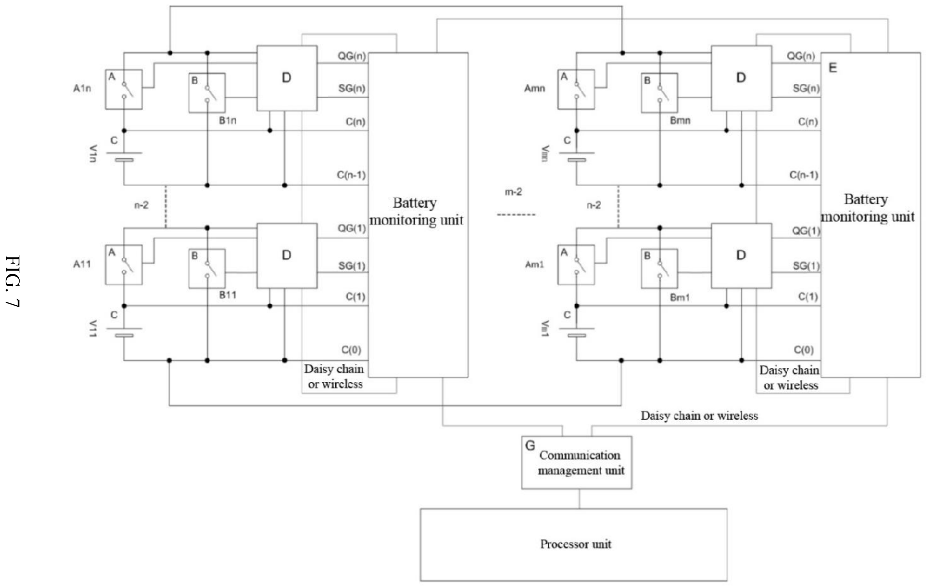

On the basis of the first embodiment, the battery module M includes a plurality of battery units C; each battery unit C is configured with the corresponding switch A, switch B, and switch drive control unit D; and the plurality of battery units C can be connected in series or parallel to form the battery module M of corresponding capacity and voltage;
As a typical battery pack implementation scheme of the present invention, as shown in FIG. 2 and FIG. 7, the battery pack includes m strings of battery modules connected in parallel, with n battery units C connected in series in each string of battery module; each battery unit C is configured with the corresponding switch A, switch B, and switch drive control unit D; each string of battery module is configured with a battery monitoring unit E;
The switch A is connected in series to the corresponding battery unit C to form a branch, and the switch A is used to control the on and off of the battery unit C; the switch B is connected in parallel to the series branch formed by the corresponding switch A and battery unit C, and the switch B is used to control whether the battery unit C is bypassed; the switch drive control unit D is connected to the corresponding switches A and B and used to control the states of the switches A and B;
The detection terminal of the battery monitoring unit E is connected to each battery unit C in that string, to acquire the power information, which is then uploaded to the processor unit F through the communication management unit G; the battery monitoring unit E receives the command sent by the processor unit F, to control the switch drive control unit D of the corresponding battery unit, so as to control the states of the switches A and B.

### Seventh embodiment:

Based on the system in the sixth embodiment, the present invention further provides a method for dynamically removing a battery unit:
A battery pack includes m strings of battery modules connected in parallel, with n battery units C connected in series in each string of battery module;
When the battery pack is working in a discharge state, if the voltage Vij of any battery unit C in the battery pack is less than a battery overdischarge protection voltage threshold VL, where i represents the number of a battery unit string, 1 ≤ i ≤ m, j represents the number of the battery unit C in the battery unit string, and 1 ≤ j ≤ n;
Then the battery unit with the lowest voltage in each string is found, and the processor unit F turns off the corresponding switch Aij and turns on the switch Bij through the switch drive control unit D corresponding to the battery unit C;
Continuous monitoring and dynamic removal are performed. At this point, the capacity of the battery pack changes to (1-1/nt) of its original capacity, where t represents the number of dynamic removals;
In the switch on/off process, the switch drive control unit D provides current limiting protection for the switches A and B separately.

In this embodiment, the battery monitoring unit E is used to monitor the voltage of each battery unit in the string, and the processor F periodically reads battery information through G in a daisy chain or wireless communication manner. If the battery pack is working in the discharge state, when the voltage Vij of any battery unit is less than VL, weak battery dynamic removal is performed. The function of removing a single battery unit can maximize the utilization of battery capacity, without being limited by the battery unit with the lowest power, and without cutting off the entire battery string, thereby achieving the effect of extending the working duration of the battery pack.

### Eighth embodiment:

On the basis of the seventh embodiment, the method further includes a charge balance step:
When the battery pack is working in a charge state, if the voltage Vij of any battery unit C in the battery pack is greater than a battery unit overdischarge overvoltage protection threshold VH, the battery unit with the highest voltage in each string is found, and the processor unit F turns off the corresponding switch Aij and turns on the switch Bij through the switch drive control unit D corresponding to the battery unit C;
Continuous monitoring is performed to achieve balance of the battery units within the battery pack;
After the charge is completed or the charge state is converted to the discharge state, the switch B is turned off and the switch A is turned on in each battery unit C processed in the charge balance step.

In this embodiment, during overcharging, all the battery units can be quickly charged to a maximum extent, to achieve balance of the battery units by using a charging device, without energy waste or increase in internal heat of the battery module due to the use of passive balance technology, thereby improving the safety of the battery module.

In the switch on/off process, the D provides current limiting protection for the switches A and B separately, to prevent overcurrent caused by short-circuiting of the battery units and voltage inconsistency between battery strings, thereby further improving the charge safety of the battery pack.

### Ninth embodiment:

On the basis of the seventh embodiment, the method further includes a static removal step:
When any battery unit C is damaged, the battery unit is hard isolated, the switch A is turned off and the switch B is turned on through the switch drive control unit D corresponding to the battery unit C.

In this embodiment, when the entire system determines through a battery state of health (SOH) detection algorithm that a battery unit is damaged (i.e., unhealthy) and cannot be further used, the battery unit is hard isolated and maintained in this state until the next battery system maintenance, thereby ensuring that the entire system can continue to work normally and is not affected by the damaged battery unit.

The embodiments of the present invention are described above, and the descriptions are exemplary but not exhaustive and are not limited to the disclosed embodiments. Many modifications and alterations are apparent to those of ordinary skill in the art without departing from the scope and spirit of the described embodiments.

## Claims

1. A battery management system, comprising: a battery module M, which can be connected in series or parallel to form a battery pack of corresponding capacity and voltage; a communication management unit G, connected to each battery module M to acquire power information; a processor unit F, connected to the communication management unit G to acquire the power information of each battery module M and send a control command to the battery module M based on the power information;
wherein the battery module M comprises a switch A, a switch B, a battery unit C, a switch drive control unit D, and a battery monitoring unit E;
the battery unit C, as a single-stage battery unit, consists of one or more battery cells connected in parallel or parallel and series;
the switch A is connected in series to the battery unit C to form a branch, and the switch A is used to control the on and off of the battery unit C;
the switch B is connected in parallel to the series branch formed by the switch A and the battery unit C, and the switch B is used to control whether the battery unit C is bypassed;
the switch drive control unit D is connected to the switches A and B and used to control the states of the switches A and B; and
a detection terminal of the battery monitoring unit E is connected to the battery unit C directly or indirectly through the switch A, to acquire the power information, which is then uploaded to the processor unit F through the communication management unit G; and the battery monitoring unit E receives the command sent by the processor unit F, to control the switch drive control unit D, so as to control the states of the switches A and B.

2. The battery management system according to claim 1, wherein the communication management unit G is connected to the battery monitoring unit E of the battery module M in a daisy chain or wireless communication manner.

3. The battery management system according to claim 1, wherein the battery monitoring unit E is directly connected to the switch drive control unit D.

4. The battery management system according to claim 1, wherein the battery monitoring unit E is connected to the switch drive control unit D through a daisy chain or wireless communication.

5. The battery management system according to claim 1, wherein the battery monitoring unit E is integrated with the switch drive control unit D, and the integrated D+E is connected to the communication management unit G in a daisy chain or wireless communication manner.

6. The battery management system according to claim 1, wherein the switch drive control unit D is integrated with the switches A and B, and the battery monitoring unit E is connected to the integrated A+B+D directly or through a daisy chain or wireless communication, and is also connected to the communication management unit G through a daisy chain or wireless communication.

7. The battery management system according to claim 1, wherein the battery module M comprises a plurality of battery units C; each battery unit C is configured with the corresponding switch A, switch B, and switch drive control unit D; and the plurality of battery units C can be connected in series or parallel to form the battery module M of corresponding capacity and voltage.

8. A battery management method, based on the battery management system according to any one of claims 1 to 7, wherein the method comprises a dynamic battery unit removal step:
assuming a battery pack comprises m strings of battery modules connected in parallel, with n battery units C connected in series in each string of battery module, wherein 1 ≤ m;
when the battery pack is working in a discharge state, if the voltage Vij of any battery unit C in the battery pack is less than a battery overdischarge protection voltage threshold VL, wherein i represents the number of a battery unit string, 1 ≤ i ≤ m, j represents the number of the battery unit C in the battery unit string, and 1 ≤ j ≤ n;
then the battery unit with the lowest voltage in each string is found, and the processor unit F turns off the corresponding switch Aij and turns on the switch Bij through the switch drive control unit D corresponding to the battery unit C; and
continuous monitoring and dynamic removal are performed; at this point, the capacity of the battery pack changes to (1-1/nt) of its original capacity, wherein t represents the number of dynamic removals.

9. The battery management method according to claim 8, wherein the method further comprises a charge balance step:
when the battery pack is working in a charge state, if the voltage Vij of any battery unit C in the battery pack is greater than a battery unit overdischarge overvoltage protection threshold VH, the battery unit with the highest voltage in each string is found, and the processor unit F turns off the corresponding switch Aij and turns on the switch Bij through the switch drive control unit D corresponding to the battery unit C;
continuous monitoring is performed to achieve balance of the battery units within the battery pack; and
after the charge is completed or the charge state is converted to the discharge state, the switch B is turned off and the switch A is turned on in each battery unit C processed in the charge balance step.

10. The battery management method according to claim 8, wherein in the switch on/off process, the D provides current limiting protection for the switches A and B separately; and
the method further comprises a static removal step: when any battery unit C is damaged, the battery unit is hard isolated, the switch A is turned off and the switch B is turned on through the switch drive control unit D corresponding to the battery unit C.
